# EUROPEAN PATENT APPLICATION

(11) **EP 3 557 353 A1**
(43) Date of publication of application: **23.10.2019**
(21) Application number: 19166492.9
(22) Date of filing: 01.04.2019
(51) Int. Cl.: G05B 19/418, G06F 3/048

(54) **DATA PROCESSING SYSTEM**

(30) Priority: 18.04.2018 GB 201806292
(71) Applicant: Rolls-Royce Power Engineering PLC, Derby DE24 8BJ (GB)
(72) Inventor: Gresham, Alan, Derby, Derbyshire DE24 8BJ (GB); Reeve, Mark, Derby, Derbyshire DE24 8BJ (GB); Beresford, Lee, Derby, Derbyshire DE24 8BJ (GB); Franklin, Mark, Derby, Derbyshire DE24 8BJ (GB)
(74) Representative: Rolls-Royce plc

(57) **Abstract**

There is disclosed a data processing system for generating pages of image data to be displayed in a monitoring system which monitors the condition of one or more instrument operation parameters. The data processing system comprising a display sub-system configured to receive parameter data representing the condition of one or more operation parameters being monitored and read a set of configuration data for a page to be displayed, wherein the set of configuration data indicates a configuration of a page for displaying a group of at least one operation parameter of the one or more operation parameters being monitored. The display sub-system is further configured to generate a page to be displayed based on the parameter data, the configuration data and pre-generated image data stored in memory.

## Description

The present disclosure concerns a data processing system, in particular a data processing system for generating pages of image data for display in a (e.g. control and) monitoring system, e.g. of an instrumentation plant.

It is known in the art that nuclear steam raising plant instrumentation systems are required to be designed so that they behave in safe deterministic ways under normal and abnormal/fault conditions.

Consequently, conventional control and monitoring system designs are very conservative, using only simple components with well-defined behaviour. For example, reactor control rooms traditionally present the current operation parameter conditions of all plant instrumentation on simple meters and indicators, and controls are implemented using control knobs and levers.

However, presenting the current condition of the operation parameters of all plant instrumentation on simple meters and indicators can be non-intuitive and requires highly skilled operators to analyse and act on the information presented in a safe and efficient manner.

Accordingly, a method is desired for providing a more intuitive and operable representation of the current condition of operation parameters of plant instrumentation, amongst other things.

According to a first aspect there is provided a data processing system for generating pages of image data to be displayed in a monitoring system which monitors a condition of one or more operation parameters of an instrument, the data processing system comprising a display sub-system configured to:
receive parameter data representing the condition of the one or more operation parameters being monitored for the instrument;
read a set of pre-generated configuration data for a current page to be displayed, wherein the set of configuration data indicates a pre-defined page configuration for displaying a group of at least one operation parameter of the one or more operation parameters being monitored in the current page;
for each operation parameter in the group of at least one operation parameter to which the set of configuration data relates:
   determine the current condition of the operation parameter from the parameter data; and
   select, based on the current condition of the operation parameter, corresponding pre-generated image data from a set of stored pre-generated image data representing a plurality of pre-defined conditions for the operation parameter; and
generate the current page to be displayed, wherein the current page includes the selected pre-generated image data for the group of at least one operation parameter, and wherein an attribute of the selected pre-generated image data within the generated current page to be displayed is controlled based on the set of configuration data.

The technology described herein provides a more intuitive and operable representation of the current conditions of instrument operation parameters being monitored in a monitoring system than conventional control and monitoring system designs. Further, generating pages to be displayed on a display removes the need for the multitudinous individual meters and other mechanical indications used in control rooms, whilst still supporting a sufficiently large number of indications to allow effective use of the monitoring system by a user. Reducing individual meters and other mechanical indications has the effect of reducing problems associated with space constraints as well as reducing costs associated with providing mechanical indications.

Generating a page to be displayed based on configuration data also allows high integrity to be achieved for the overall monitoring system. For example, the pre-generated image data (or graphics) may be in the form of image icons, and the individual image icons included in a page (or image) seen on a display of the monitoring system can be deterministically traced to the internal configuration data and the received parameter data.

Furthermore, generating pages to be displayed using pre-generated image data stored in memory reduces the overall processing burden on the system when compared to hypothetical arrangements in which a graphics processor (for example) is employed to generate image data on a page-by-page basis. Indeed, the technology described herein can be provided without the use of such processors.

The parameter data that is received by the display sub-system may be in any suitable or desired form.

In an embodiment, the parameter data may be pre-processed for use by the display sub-system. Thus the data processing system may be in communication with a pre-processing module configured to receive input data from one or more sensors, said input data representing the condition of the one or more operation parameters being monitored, and process that data from its original form to a form suitable for use by the display sub-system.

The display sub-system may be configured to select corresponding pre-generated image data based on the current condition of the operation parameter by: using the current condition of the operation parameter to generate a pointer (e.g. an index) to a location in memory at which pre-generated image data that represents a corresponding pre-defined condition is stored.

The locations in memory for the set of stored pre-generated image data representing the plurality of pre-defined conditions for the operation parameter may be indicated in respective entries of a corresponding address look-up table in memory; the set of configuration data for the current page to be displayed may comprise data identifying a base address of the corresponding address look-up table; and the pointer may be in the form of an offset from the base address to an entry in the corresponding address look-up table at which the location in memory for the pre-generated image data that represents the corresponding pre-defined condition is indicated.

The set of configuration data may comprise at least one of: data indicating the horizontal position within the current page that the selected pre-generated image data should take; data indicating the vertical position within the current page that the selected pre-generated image data should take; and data indicating a type of graphic element that the pre-generated image data corresponds to.

The set of configuration data may further indicate a pre-defined page configuration for at least one pre-defined user-input option that is to be represented in the current page to be displayed (e.g. for the operation parameter); and the display sub-system may be configured to include pre-generated image data representing the at least one pre-defined user-input option in the generated current page.

The set of configuration data may indicate a plurality of pre-defined user-input options for the operation parameter; and the page generation module may be configured: to select one or more (or all) of the plurality of pre-defined user-input options to be included in a page to be displayed, based on the determined condition for the operation parameter; and generate a page to be displayed which includes pre-generated image data representing the selected one or more pre-defined user-input options for the operation parameter.

The data processing system may comprise a further processing sub-system that is configured to process user inputs and issue appropriate (e.g. plant control) signalling based on, *inter alia*, those user inputs.

The data processing system may comprise a user sub-system (e.g. any sub-system suitable for processing user inputs) configured to: receive an input from a user of the monitoring system corresponding to a selection of a pre-defined user input option that is represented in the current page for the at least one operation parameter; and issue an instruction to alter operation of a device (e.g. of a plant) that influences the at least one operation parameter, based on the received input and information stored in an input look-up table, wherein respective entries in the input look-up table each corresponds to a pre-defined user input option and includes information indicating a corresponding instruction to alter operation of the device. The instruction may be in the form of an actuation command for controlling an actuator of the instrument being monitored and to which the operation parameter relates etc. The instruction may be in the form of a plant control signal for controlling the operation of a plant to which the operation parameter relates.

The set of configuration data that is read for the page to be displayed may be one of a plurality of different sets of configuration data stored for respective configurations of a page for displaying a group of at least one operation parameter being monitored. In order for the display sub-system to know which set of configuration data to use for a page, the display sub-system may receive appropriate state signalling (also referred to herein and in the drawings as pagestate signalling) that indicates the appropriate set of configuration data to be used to generate a page to be displayed.

Thus, the set of configuration data that is read for the current page to be displayed may be one of a plurality of different sets of pre-generated configuration data indicating respective page configurations for displaying a group of at least one operation parameter being monitored or at least one pre-defined user-input option; and the display sub-system may be configured to select the set of configuration data that is read for the current page to be displayed based on an input from a user of the monitoring system, wherein the input is received by a user sub-system of the data processing system.

This may be advantageous in that it provides greater functionality and operability to the user. For example, a user can choose which operation parameters (conditions) and/or corresponding user input options to see on the display as desired and appropriate, instead of having to mentally process and analyse multitudinous individual meters and other indications in a control room. However, it will be appreciated that the functionality provided to the user is limited to the pre-defined page configurations indicated in the sets of configuration data.

The user sub-system may be configured to: receive the input from a user of the monitoring system; determine which set of configuration data should be read for the current page to be displayed based on the received input and information stored in a corresponding entry in an input look-up table, wherein the corresponding entry in the input look-up table includes information indicating a corresponding set of configuration data to be read for the current page to be displayed; and send state signalling indicating the result of the determination to the display sub-system.

The display sub-system may be configured to generate a plurality of pages to be displayed, where each page is produced according to a corresponding pagestate and configuration data.

In such arrangements, the received input from a user of the monitoring system may correspond to a user selecting a pre-defined user input option in a previous page (compared to the current page that is being generated). Likewise, a user may select a pre-defined user input option that is included in the current page, and the display sub-system may be configured to select the set of configuration data that is read for the next page to be displayed based on a received input corresponding to that selection.

The Applicants have recognised that it may be necessary or desirable for the received parameter data to affect the behaviour of the user sub-system. In particular, it may be desirable for the determined condition of the operation parameter for a given page to influence the user input options represented in a subsequent page to be displayed.

Thus, the set of configuration data that is read for the current page to be displayed may further indicate a reference condition value for the operation parameter; the display sub-system may be configured to (e.g. when generating the page to be displayed) compare the determined current condition of the operation parameter with the reference condition value and indicate the results of the comparison to the user sub-system. The user sub-system may be configured to: determine which set of the plurality of different sets of pre-generated configuration data should be read by the display sub-system for a subsequent page to be displayed, based on the results of the comparison; and may send state signalling to the display sub-system indicating which set of pre-generated configuration data should be read for a subsequent page to be displayed.

According to another aspect of the present disclosure, there is provided a method of operating a data processing system for generating pages of image data to be displayed in a monitoring system which monitors a condition of one or more operation parameters of an instrument; the method comprising a display sub-system of the data processing system:
receiving parameter data representing the condition of the one or more operation parameters being monitored for the instrument;
reading a set of pre-generated configuration data for a current page to be displayed, wherein the set of configuration data indicates a pre-defined page configuration for displaying a group of at least one operation parameter of the one or more operation parameters being monitored in the current page;
for each operation parameter in the group of at least one operation parameter to which the set of configuration data relates:
   determining the current condition of the operation parameter from the parameter data; and
   selecting, based on the current condition of the operation parameter, corresponding pre-generated image data from a set of stored pre-generated image data representing a plurality of pre-defined conditions for the operation parameter; and
generating the current page to be displayed, wherein the current page includes the selected pre-generated image data for the group of at least one operation parameter, and wherein an attribute of the selected pre-generated image data within the generated current page to be displayed is controlled based on the set of configuration data.

It will be appreciated that this aspect may include any one or more of the optional features described above with respect to the first aspect. For example, selecting corresponding pre-generated image data based on the determined condition of the operation parameter may comprise the display sub-system using the determined condition of the operation parameter to generate a pointer to a location in memory at which pre-generated image data that represents a corresponding pre-defined condition is stored.

The technology described herein extends to one or more field-programmable gate arrays configured to perform the methods described in any of the statements included herein. For example, the data processing system may be entirely FPGA based.

The technology described herein extends to a computer program that, when read by a computer, causes performance of the method as described in any of the statements included herein.

The technology described herein extends to a non-transitory computer readable storage medium comprising computer readable instructions that, when read by a computer, cause performance of the method as described in any of the statements included herein.

The technology described herein extends to a signal comprising computer readable instructions that, when read by a computer, cause performance of the method as described in any of the statements included herein.

The various "sub-systems" described herein, such as the display sub-system or the user sub-system, may be coupled to one another via a wireless link and may consequently comprise transceiver circuitry and one or more antennas. Additionally or alternatively, the sub-systems described herein may be coupled to one another via a wired link and may consequently comprise interface circuitry (such as a Universal Serial Bus (USB) socket). It should be appreciated that the sub-systems described herein may be coupled to one another via any combination of wired and/or wireless links.

The various sub-systems described herein may comprise any suitable circuitry to cause performance of the methods described herein and as illustrated in the Figures. The sub-systems may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In an embodiment, all page generation, user input processing and configuration data is controlled by logical circuits implemented in an (e.g. entirely) FPGA based system. It will be appreciated that FPGA circuitry is truly a "hard" implementation of program execution compared to processor-based systems that involve several layers of abstraction to help schedule tasks and share resources among multiple processes. FPGAs which do not use operating systems provide deterministic hardware dedicated to every task, thereby increasing the integrity of the system.

The data processing system may include at least one microprocessor (for the display sub-system or the user sub-system) and may comprise a single core processor, may comprise multiple processor cores (such as a dual core processor or a quad core processor), or may comprise a plurality of processors (at least one of which may comprise multiple processor cores).

The data processing system may have, and/or be in communication with an output device for displaying pages of image data generated by the data processing system and an input device for enabling an operator to at least partially control the data processing system, and/or may have or be in communication with a memory in which pages generated by the data processing system may be stored.

The output device may be any suitable device for conveying information to a user. For example, the output device may be a display (such as a liquid crystal display, or a light emitting diode display, or an active matrix organic light emitting diode display, or a thin film transistor display, or a cathode ray tube display), and/or a loudspeaker, and/or a printer (such as an inkjet printer or a laser printer). The data processing system may be arranged to provide a signal to the output device to cause the output device to convey information to the user.

The input device may comprise any suitable device for enabling an operator to at least partially control the data processing system. For example, the input device may comprise one or more of a keyboard, a keypad, a touchpad, a touchscreen display, and a computer mouse. The user sub-system may be configured to receive signals from the user input device. The user sub-system may also function as an output device described above.

The data processing system may comprise and/or be in communication with one or more memories that store the data described herein, and/or that store software for performing the processes described herein.

The memory may be any suitable non-transitory computer readable storage medium, data storage device or devices, and may comprise a hard disk and/or solid state memory (such as flash memory). The memory may be permanent non-removable memory, or may be removable memory (such as a universal serial bus (USB) flash drive).

The memory may store a computer program comprising computer readable instructions that, when read by a processor, causes performance of the methods described herein, and as illustrated in the Figures. The computer program may be software or firmware, or may be a combination of software and firmware.

The computer program may be stored on a non-transitory computer readable storage medium. The computer program may be transferred from the non-transitory computer readable storage medium to the memory. The non-transitory computer readable storage medium may be, for example, a USB flash drive, a compact disc (CD), a digital versatile disc (DVD) or a Blu-ray disc. In some examples, the computer program may be transferred to the memory via a wireless signal or via a wired signal.

The technology described herein should (and in an embodiment does) produce some useful output data, e.g. a page of image data for display.

Embodiments will now be described by way of example only, with reference to the Figures, in which:
**Figure 1** is a schematic illustration of the overall system data flow in a plant control and monitoring system;
**Figure 2** is a schematic illustration of pre-processed parameter data;
**Figure 3** is a schematic illustration of a data processing system in accordance with an embodiment of the present disclosure;
**Figure 4** is a schematic illustration of a display sub-system of the data processing system, in accordance with an embodiment of the present disclosure;
**Figure 5** is a schematic illustration of the configuration data in accordance with an embodiment of the present disclosure;
**Figure 6** is a schematic illustration of the operation of the page builder state machine and a graphics generator of the data processing system, in accordance with an embodiment of the present disclosure;
**Figure 7** is a schematic illustration of how a page representing an operation parameter condition of a valve of the plant is generated in accordance with an embodiment of the present disclosure;
**Figure 8** is a schematic illustration of how a page representing an operation parameter condition corresponding to a band graphic is generated in accordance with an embodiment of the present disclosure;
**Figure 9** is a schematic illustration of a user sub-system of the data processing system, in accordance with an embodiment of the present disclosure;
**Figure 10** is a schematic illustration of a plurality of page configurations in accordance with the present disclosure;
**Figure 11** is a flow diagram illustrating various touch events and associated signalling for the plurality of page configurations of Figure 10;
**Figure 12** schematic illustrates the positional attributes of graphical icons defined for the plurality of page configurations of Figure 10;
**Figure 13** illustrates example operation of a part of a Touch behaviour table, in accordance with the present disclosure;
**Figure 14** illustrates a Touch behaviour table for implementing the plurality of page configurations shown in figure 10;
**Figure 15** is a schematic illustration of a touch control register in accordance with an embodiment of the present disclosure;
**Figure 16** is a schematic illustration of the operation of the data processing system when implementing a touch control register in accordance with an embodiment of the present disclosure; and
**Figure 17** illustrates an example implementation of a touch control register for an arrangement where there is a requirement to control two instruments, specifically two valves of a plant: a port valve and a starboard valve.

Like reference numerals will be used, where appropriate, for like features shown in the Figures.

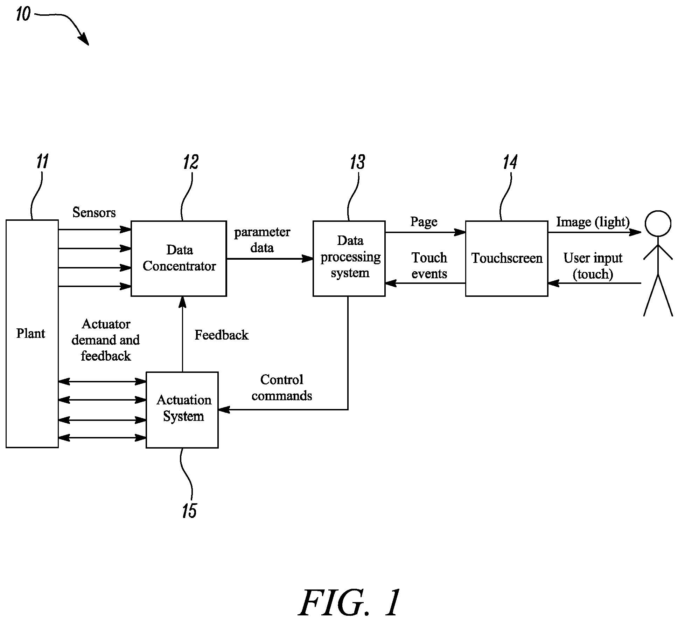

**Figure 1** is a schematic illustration of the overall system data flow in a plant control and monitoring system 10. As can be seen in Figure 1, the system comprises a plant 11, a data concentrator 12, a data processing system 13, a touchscreen 14 and an actuation system 15.

The control and monitoring system 10 may monitor the (e.g. current) condition of multiple operation parameters of the plant 11 via sensors which provide signals representing the measured conditions to a data concentrator 12. The data concentrator 12 is a pre-processing module and operates to convert signals representing the measured conditions into appropriate parameter data of a type that is suitable for use by the data processing system 13. The data concentrator 12 may also be responsible for validating sensor inputs. The parameter data may be sent to the data processing system 13 at predefined time intervals. The data processing system 13 keeps a current copy of the parameter data in memory and determines which operation parameters are to be included in a page to be displayed based on, e.g., configuration data stored in a memory for the data processing system 13 and state signalling corresponding to one or more user (touch) inputs received on the touchscreen 14 of the system.

The data processing system 13 then creates a page for display using pre-generated image data (e.g. bitmap images or graphics) stored in its memory. For example, and as will be described further below, the data processing system 13 may use the received parameter data (or a subset thereof, indicated by appropriate configuration data) as a set of lookup addresses to point to pre-generated image data, corresponding to the received parameter data (and thus the measured condition of one or more operation parameters), which it will then assemble into a foreground buffer which is merged with a background image to create a page. In this way, the value of each pixel in the page (and on a display screen) can be deterministically traced to the received parameter data. This can be (and in embodiments is) accomplished without software, processor, or a graphics processor by using only logic implemented in FPGA fabric and through a set of look-up data tables.

In some cases, user input on the touchscreen 14 may cause the data processing system 13 to issue control commands to the actuation system 15. The actuation system may in turn process such control commands and issue corresponding actuator demands to an actuator of the plant, such as a demand to actuate a mechanical valve of the plant. The actuation status and any commands that affect the information to be displayed in a page may be fed back to the data concentrator 12.

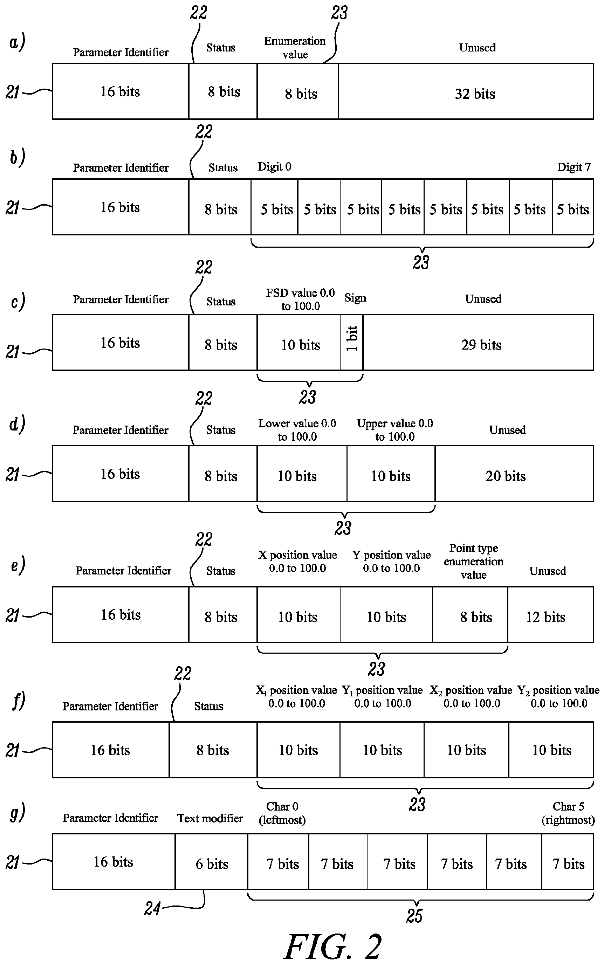

As mentioned above, the data concentrator 12 may convert the signals received from the sensors to parameter data of a type that is suitable for use by the data processing system 13, e.g. as values that are indexed to a set of lookup addresses pointing to pre-generated image data corresponding to the received parameter data. These suitable data types will now be described with respect to Figure 2.

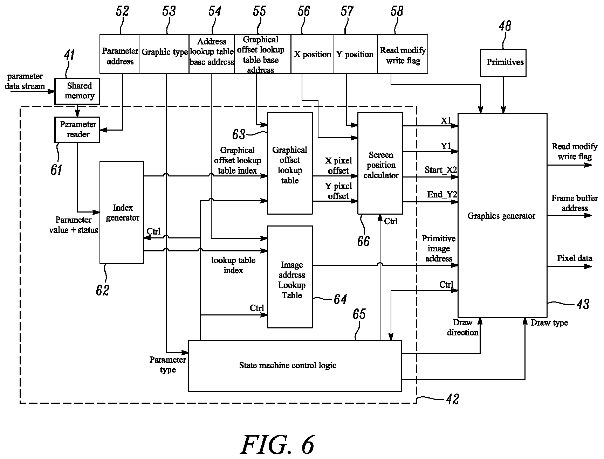

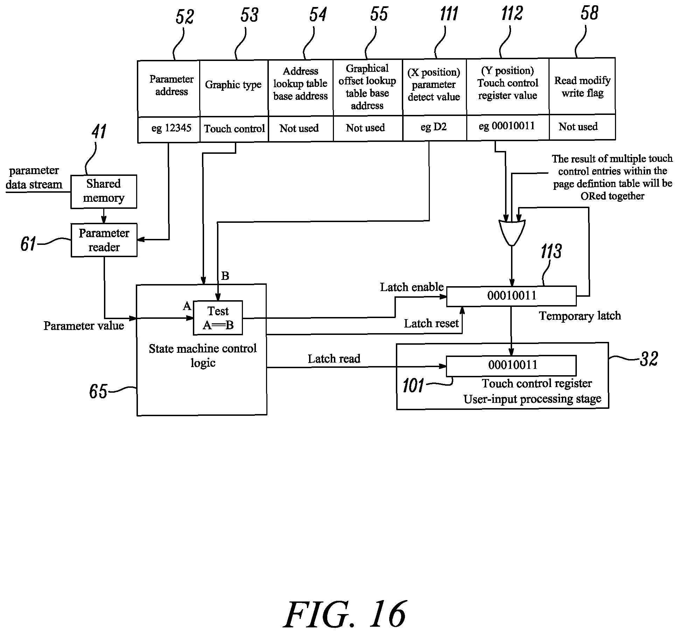

**Figure 2** shows seven examples of how the parameter data may be stored for use by the data processing system 13 to generate a page to be displayed. As can be seen in Figure 2, each operation parameter that is represented in the signals received from the sensors may be allocated 64 bits in memory. In the first six examples shown in Figures 2a-2f, 16 bits of memory are allocated for storing an identifier of the operation parameter (the "parameter identifier") 21, 8 bits of memory are allocated for storing the status 22 of the operation parameter (e.g. where the status indicates an alarm, warning or offline mode) and the remaining 40 bits of memory are allocated for storing one or more values 23 for the operation parameter condition. In the seventh example shown in Figure 2g, 6 bits are allocated for a text modifier and 42 bits are allocated for one or more textual character values.

The value of the operation parameter condition may be stored in a way that is dependent on the type of operation parameter that is included in the sensor signals, e.g. a graphics type that is specific to the operation parameter in question.

A limited number of graphics types may be required (or desired) to make up a scene, as will now be discussed.

As shown in the example of Figure 2a, the operation parameter may be of a single enumeration value graphics type (e.g. a valve icon with enumerated states of "open", "shut" and "in-transit"), in which case 8 bits may be used to represent the single value 23 (although a different number of bits may be used if desired).

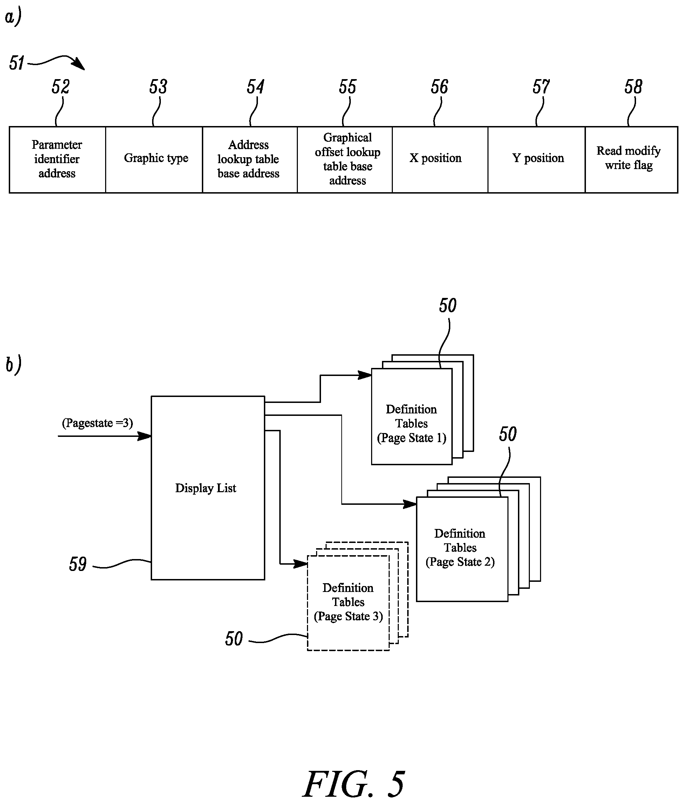

Where the operation parameter is of a graphics type comprising a collection of eight enumeration values (e.g. the numeric value "1234.567"), as shown in Figure 2b, 5 bits may be used to represent each value.

In the example of Figure 2c, the operation parameter is of a percentage full scale deflection graphics type, e.g. for graphics types comprising fills, bar graphs and levels, and 10 bits are used for indicating a percentage of full scale deflection (as a value between 0.0 and 100.0) and a single bit is used to represent the sign of the deflection.

The values 23 of operation parameters (conditions) in the form of an operating bands graphics type may be represented using 20 bits, 10 bits for each one of the lower and upper value of the band (each as a value between 0.0 and 100.0), as shown in Figure 2d.

The values of operation parameters (conditions) in the form of a plot points graphics type may be represented as appropriate x and y position values (with 10 bits each, corresponding to a value between 0.0 and 100.0) and a point type enumeration value (with 8 bits), as shown in Figure 2e.

In the example of Figure 2f, the condition of an operation parameter is represented as a line and the value 23 is in a form where 10 bits is used (corresponding to values between 0.0 and 100.0) for each x and y position defining the line.

In the example of Figure 2g, there is provided a variant similar to the graphics type shown in Figure 2b, wherein the condition (value) of an operation parameter is represented as text that is displayed on the screen. In particular, 6 bits may be allocated for a text modifier 24 and 42 bits may be allocated for one or more textual characters 25.

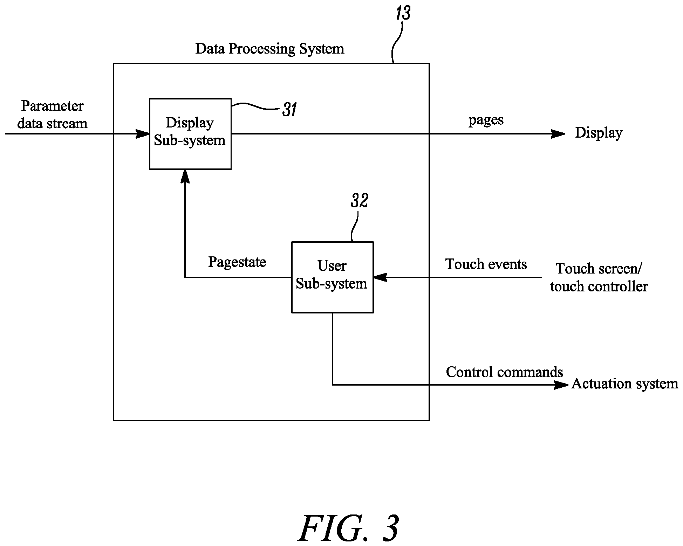

**Figure 3** illustrates the data processing system 13 of Figure 1 in greater detail. As can be seen, the data processing system 13 comprises two main sub-systems: a display sub-system 31 and a user sub-system 32.

The display sub-system 31 of the data processing system 13 may be configured to generate a page of image data for display using the parameter data (stream), the pre-generated image data (not shown), configuration data (not shown) and state signalling (referred to in the Figures as the "Pagestate") provided by the user sub-system 32.

As will be described in further detail below, the state signalling provides an indication of the state of a page to be displayed on the touchscreen 14. For example, it may be used at least in part, together with corresponding configuration data, to select which operation parameters and in turn what pre-generated image data to use when generating a page to be displayed. Pagestate is used to select what operation parameters are displayed and the parameter value(s) (the value(s) of the operation parameter condition(s) in the parameter data stream) is used to determine the appearance of one or more graphics elements to represent the operation parameters condition(s).

The user sub-system 32 may recognise one or more touch events indicative of a user input received on the touchscreen 14 of the overall system 10 and generate appropriate state signalling based on those touch events. The user sub-system may also issue control commands to the actuation system 15 in response to touch events as described with respect to Figure 1.

The operation of the data processing system 13 will now be described in greater detail with respect to the display sub-system 31 and the user sub-system 32 in turn.

### Display sub-system

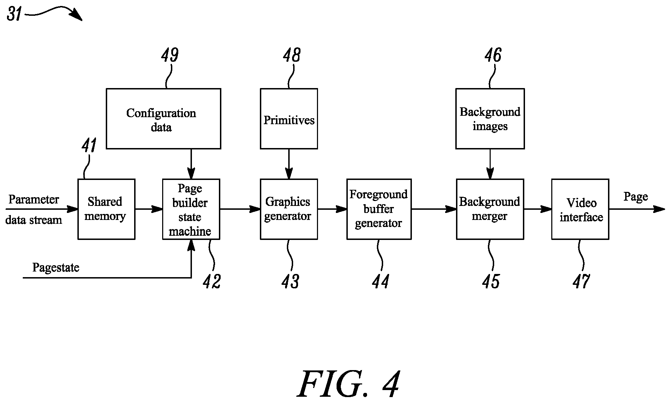

As shown in **Figure 4**, the display sub-system 31 comprises a shared memory buffer 41, a page builder state machine 42, a graphics generator 43, a foreground buffer generator 44, a background merger 45 and a video interface 47. It can also be seen that one or more sets of pre-generated image data (representing plural possible conditions of one or more operation parameters being monitored) is stored in the form of primitives in memory 48. Furthermore, appropriate, e.g. pre-generated, background images are stored in memory 46 of the display sub-system 31.

The display sub-system 31 is operable to receive and validate appropriately converted parameter data and store the parameter data in the shared memory 41 for later use.

The page builder state machine 42 operates to determine which pre-generated image data in memory 48 should be used to generate a (e.g. the current) page to be displayed. This is done based on state signalling (referred to as "Pagestate" in the Figures) indicating which set of configuration data 49 to use, which in turn determines what operation parameters are read from the shared memory 41. In particular, the page builder state machine 42 may determine an address in the memory 48 at which pre-generated image data that should be used to generate a page to be displayed is stored and then pass this address, together with other configuration data, to the graphics generator 43 for processing the image data stored at those memory addresses to generate the page. The page builder state machine 42 may also pass suitable control signalling to the graphics generator 43.

The pre-generated image data stored in memory 48 may be addressed using appropriate image address lookup tables. For example, the locations in memory 48 of image data representing different pre-defined conditions within a set of pre-generated image data are indicated in a corresponding graphics look-up table in memory. The display sub-system 31 may use the condition (e.g. the value and status) of an operation parameter that is represented by the parameter data to generate a pointer to (e.g. the address of) the position within a corresponding graphics look-up table at which the address for the image data corresponding to the condition of the operation parameter that is represented by the parameter data is indicated.

The graphics generator 43 uses the memory address(es) provided by the page builder state machine 42 to retrieve the appropriate (determined) primitive image data (e.g. graphic objects or icons) stored in memory 48 (which may be non-volatile memory (NVM)). The graphics generator 43 may then use the selected primitive image data to "draw" appropriate foreground image pixel data (for the operation parameter(s)) into a buffer within the foreground buffer generator 44.

The graphics generator 43 may also generate data representing the addresses in the foreground buffer for the eventual pixel data. This may be facilitated by the primitive image data being stored in memory 48 with height and width information that is indicative of the position that the primitive image data should take within an overall page (and so the position within the foreground buffer and on the page). The graphics generator 43 may also signal whether a read modify write in the foreground buffer is required for each pixel. (This may be desired when multiple pixels are written to the foreground buffer at once and some merging with existing foreground buffer contents is required. For example, a read-modify-write operation will allow primitives to be written to the foreground buffer to the nearest pixel, such that the edges of overlaid primitives in the foreground buffer meet to the nearest pixel.)

The foreground buffer generator 44 stores the foreground image pixel data generated by the graphics generator 43 in a memory buffer, from where it can be retrieved by the background merger 45 for integration with an appropriate background image.

To facilitate the integration of the foreground image and the background image, a predefined colour pallet is used for the foreground image pixel data, wherein one of the colours that may be used for a pixel is used to indicate that the pixel is transparent, i.e. that a pixel having the "transparent" colour in the foreground image should be given the colour of the corresponding pixel in the background image when the two are merged. All other colours used for a pixel in the foreground image will take precedence over the colour used in a corresponding pixel in the background image.

The foreground buffer generator 44 may implement four memory buffers that are used in a round-robin fashion for each page as follows:
1. The first foreground buffer is tested and cleared (the pixels of the foreground buffer are set to be transparent);
2. A second foreground buffer is checked to ensure it has been cleared;
3. A third foreground buffer is updated with foreground image pixel data received from the graphics generator 43 - this may include a mixture of transparent and non-transparent colours; and
4. A fourth foreground buffer is read by the background merger 45.

As mentioned above, the background merger 45 is responsible for integrating (e.g. merging) a, e.g., fixed bitmap background image (which may be selected based on the page builder state machine 42 control signalling mentioned above) from memory 46 with the foreground image pixel data in the foreground buffer and passing the integrated pixel data to the video interface 47.

In the video interface 47, pixels from the integrated pixel data (page) may be handled four pixels at a time, with a limited colour palette (e.g. of 16 colours). The video interface 47 may translate the integrated pixel data, four pixels at a time, into corresponding twenty-four bit colour codes. These are in turn multiplexed into a standard Digital Visual Interface (DVI) page for display (not shown). The display may be refreshed for each DVI page, typically within 16.6ms and each refresh taking image data from the next completed foreground buffer.

As mentioned above with respect to Figure 4, the page builder state machine 42 operates to select which pre-generated image data in memory 48 to use for a page based on not only the parameter data stored in the shared memory 41, but also appropriate configuration data 49 and state signalling.

The configuration data 49 may be any such information that can be used by the display sub-system 31, e.g. the page builder state machine 42 and graphics generator 43, to control an aspect of page generation. It may be any information that is indicative of the current page being displayed or a (subsequent) page to be displayed.

For example, the configuration data 49 may indicate what the background image is or should be, what graphic icons (pre-generated image data) should be placed where, what image data are included, what controls, pop-ups and bezels are present on the display etc. The configuration data may also indicate one or more operation parameters represented in the parameter data that should be included in the current page to be displayed.

The data processing system 13 may be operable to generate a page illustrating one or more operation parameters in a variety of different, pre-defined configurations. For example, the data processing system 13 may be able to generate a page illustrating the condition of a single operation parameter according to a first pre-defined configuration or a page illustrating the same condition of the operation parameter (and/or the conditions of one or more other operation parameters) in a second pre-defined configuration, and so on and so forth for each configuration.

The data processing system 13 may accordingly maintain plural sets of configuration data for plural configurations, wherein each set of configuration data is indicative of how the page to be displayed should be generated according to the configuration to which the set of configuration data in question relates.

Each set of configuration data may be arranged in a corresponding, so-called "Definition Table", as will now be described with respect to Figure 5.

**Figure 5** illustrates an example arrangement where definition tables may be used in accordance with the present disclosure.

Each definition table will include (one or more) entries corresponding respectively to the various (one or more) operation parameters to be displayed in the page being generated. **Figure 5a** shows a single one of these entries 51, although it will be appreciated that any number of entries may be included as appropriate and, e.g., dependent on the number of operation parameters in a configuration to which the definition table 50 relates. However, it will be appreciated that an operation parameter may be associated with multiple definition tables, for example if the pre-generated image data (e.g. a graphical object) is to have a different position for different page configurations.

As can be seen in Figure 5a, each entry 51 may include predefined fields as follows:
- An identifier field 52 indicating the operation parameter to be included in the page to be displayed. This may be in the form of an address (or identifier thereof) that is used to extract the parameter data representing the desired operation parameter from the shared memory 41 referred to with respect to Figure 4.
- A graphic type field 53 indicating the type of graphic element (pre-generated image data) that is to be used to represent the operation parameter to be included in the page. For example, the graphic type may indicate how the pre-generated image data should be used when generating the page to be displayed. This may indicate, for example, if the operation parameter is to be represented as an enumeration, a fill/level, an operating band, plot point or line, etc..
- An image address lookup table base address field 54. As mentioned above, the pre-generated image data in memory 48 may be addressed through an image address lookup table. The image address lookup table base address field 54 may therefore be an address serving as a reference point ("base") for the image address lookup table, e.g. a memory address indicating the beginning of the image address lookup table in memory 48; the position within the image address lookup table at which the address for determined or selected, e.g. desired, pre-generated image data is stored may then be indicated as an offset from the base address (determined from the parameter data).
- A graphical offset lookup table base address field 55. Where the entry 51 corresponds to an operation parameter of a specific graphical type that requires to be moved or sized on the screen (such as a fill, plot point, line, level) the image data can be scaled through a graphical offset lookup table. The graphical offset lookup table base address field 55 may therefore be an address serving as a reference point ("base") for the graphical offset lookup table. The graphical offset lookup table translates percent full scale deflection (%FSD) for the parameter value into a corresponding number of pixels on the screen.
- An X position field 56, which is the horizontal position that the pre-generated image data, e.g. a specific graphics icon, should take on the display screen (in terms of 0-1919 pixels, for example). For graphics that move or are scaled on the screen (through the graphics offset lookup table), this would be the "zero" reference point on the screen.
- A Y field 57, which is the vertical position that the pre-generated image data, e.g. a specific graphic, should take on the display screen (in terms of 0-1079 pixels, for example). For graphics that move or are scaled on the screen (through the graphics offset lookup table), this would be the "zero" reference point on the screen.
- A Read-modify-write field 58, which serves as a flag to the graphics generator 43 as to whether the graphics generator 43 should use Read-Modify-Write or Write-Only transactions when writing to the foreground buffer mentioned above.

With regard to read-modify-write, it is noted here that primitives (image data) may be written to the foreground buffer sequentially as defined by the display list/page definition tables (in each 16.6ms cycle) as described below, starting at the top of the list and working down to the bottom. Therefore, if a write-only operation is used, the Primitives written last will overwrite earlier primitives where they are coincident at the same location in the foreground buffer (e.g. for the same pixel(s)). A read-modify-write operation, however, will allow new image data to be merged with existing foreground buffer content. Where the primitives are written to the foreground buffer for four pixels at a time, a read-modify-write operation will allow primitives to be written to the foreground buffer to the nearest pixel, such that the edges of overlaid primitives meet to the nearest pixel, rather than to the nearest four pixels as would be the case if a write only operation was used. It will be appreciated that a read-modify-write operation takes more time than a write-only operation, so the flag may be set to write-only to improve performance.

Where the nature of the parameter data and the location at which the parameter data is to be stored is known in advance, the configuration data can be prepared, e.g. at manufacture, before the parameter data is received.

The data processing system 13 may maintain a definition table(s) for each configuration of operation parameters and their corresponding graphics types. Thus the data processing system 13 will, in this arrangement, maintain a number of definition tables 50 that may or may not relate to the current page to be (or being) generated, depending on what information is desired, e.g. selected or required, for display on the touchscreen 14.

In order for the display sub-system 31 to know which definition table (set of configuration data) is relevant to the page to be displayed (or rather the operation parameter(s) to be displayed on the touchscreen 14), and that should therefore be used to generate the page, the display sub-system 31 is provided with appropriate state signalling (referred to in the Figures as the "Pagestate") from the user sub-system 32. This state signalling provides an indication of the definition table(s) that is relevant to the page to be displayed and the display sub-system 31 may use this information to select the definition tables 50 (configuration data) to use when generating the page. The state signalling may be based on an input from a user of the touchscreen 14.

As shown in the arrangement of **Figure 5b**, the definition tables 50 may be addressed through a so-called "Display List" 59. The display list entries contain addresses of one or more appropriate definition tables 50 for the current Pagestate. During operation the user sub-system 32 is operable to transmit the state signalling to the display sub-system 31 which will use it as a pointer to the positions within the display list 59 at which the addresses of appropriate definition tables 50 for the page to be displayed are stored. As shown in Figure 5b, the state signalling may indicate a numerical value (e.g. "3" as shown) used as an index into the display list 59 to the position at which the corresponding definition tables 50 are located in the configuration data 49.

The page builder state machine 42 may continually (sequentially) process each entry 51 in each definition table 50 pointed to by the display list 59 for the current Pagestate signalling. When the last page definition table for the current pagestate is processed, the pagestate is checked. If the current Pagestate signalling changes, a new display list 59 entry point is used (when the current definition tables have been processed), pointing to a different set of page definition tables 50. If the current Pagestate is the same, the page builder state machine 42 processes the same entries 51 in the same definition tables 50 pointed to by the display list 59 with the same entry point. This approach allows efficient reuse of the page definition tables 50, for example if there is only a small difference in a scene, such as a button being pressed, or a pop-up panel being present therein.

The page builder state machine 42 may process each entry 51 in a given page definition table 50 in sequence, and use the information it contains to process graphical data for the graphics generator 43. The operation of the page builder state machine 42 and the graphics generator 43 will now be described in further detail with respect to Figure 6.

**Figure 6** illustrates the process of generating a page that is to include (represent) only one operation parameter defined by a single entry 51 in a definition table, for convenience.

A parameter reader 61 of the page builder state machine 42 operates to read field 52 of the definition table entry 51 in order to identify the parameter data, particularly the operation parameter, in the shared memory 41 that is to be used to generate the page. An index generator 62 may then use the value and status of the operation parameter, as indicated in the parameter data, to generate an index into an image address lookup table 64 and (as appropriate for the graphic type indicated in field 53) an index into a graphical offset lookup table 63. The index may be in the form of an offset relative to base addresses indicated by fields 54 and 55 of the definition table entry 51, as shown.

The image address lookup table 64 provides the address in memory 48 of the pre-generated image data to be used by the graphics generator 43 for the page.

If the graphics type is of a kind that moves around the screen (such as a plot point, line, level or caret), or is part drawn (such as a fill, operating band or bar graph), the graphical offset lookup table base address 55 and the graphical offset lookup table index are translated into corresponding X and Y pixel offsets through the graphical offset lookup table 63.

The X and Y pixel offsets are then passed to a screen position calculator 66, where the pixel offsets are combined with the base X and Y positions in fields 56 and 57 of the definition table entry 51. This information is then used to determine the actual placement positions and also the start and end positions within the image primitives for the graphics generator 43 to use (this allows only part of the image to be drawn, for example part of a fill primitive). For lines, the graphical offset lookup table 63 may be accessed twice for the coordinates of the start and end of the line; these are provided by the screen position calculator 66 to the graphics generator 43 as X1,Y1 and X2,Y2 values.

The state machine control logic 65 provides control of processing logic and sequencing, also providing the graphics generator 43 with the draw direction (to facilitate drawing bar graphs down the page rather than up the page for negative values) and the draw type (i.e. either primitive draw or a line draw).

The signals passed from the page builder state machine 42 to the graphics generator 43 allow drawing of the different graphic types, under control of the state machine control logic. These are summarised below:

**Table 1 - Page builder/graphics generator interface**

| **Signal Name** | **Description** | **Specific Use for Different Types of Graphic Object** |
|---|---|---|
| Primitive Address | NVM start address of the primitive used to draw the graphic object. | Used by all graphic object types to specify the source of pixel data. (For line draws, this value is used to point to a primitive that informs the line draw function of the colour and width to be drawn). |
| X1 | Position of graphical object on the screen, in X. (Range 0 to 1919 pixels). | Used by all graphic object types to indicate drawing position of graphic on the screen. For line draws, (X1,Y1) represents the start of the line. |
| Y1 | Position of graphical object on the screen, in Y. (Range 0 to 1079 pixels). | |
| Start_X2 | Used to define the drawing start point within the primitive, or the final X coordinate for the line draw. | For line draws, Start_X2 and End_Y2 represent the X and Y coordinates of the end of the line (X2, Y2). |
| | For situations where the whole primitive is to be displayed, this value is set to zero. | For all primitive based objects such as Valves, Tank Fills, Vertical Bar Graphs, and Horizontal Bar Graphs, Start_X2 represents the drawing start point within the primitive, and End_Y2 represents the drawing end point. |
| End_Y2 | Used to define the drawing finish point within the primitive, or the final Y coordinate for the line draw. | |
| | | Start_X2 and End_Y2 define what proportion of the primitive is to be displayed and are specified in pixels. |
| | For situations where the whole primitive is to be displayed, this value is set to full scale. | |
| Draw Direction | Defines in which direction (+ve or -ve) the primitive is to be displayed. | Typically set to positive, but for negative going bar graphs it would be set to -ve. |
| Read Modify Write | Signal controls whether the graphics generator 43 uses a Read-Modify-Write or straight Write-Only transactions when writing to foreground video RAM. | Set TRUE when attempting to overlay multiple foreground graphics. Normally set FALSE to enable the Graphics Generator 43 to use the faster Straight Write-Only transactions wherever possible. |
| Draw Type | Signal controls how the graphics generator 43 interprets the above inputs, and whether it writes a simple primitive based object to memory, or invokes a line draw. | All graphical objects are based on a predefined set of primitives, except the line draw which is calculated in real time. |
| Ctrl | The page builder signals the graphics generator 43 to initiate a draw process and the graphics generator 43 signals to the page builder state machine 42 when the draw is complete. | The control lines between the page builder state machine 42 and graphics generator is used with all types of graphical object. The time for setup of interface signals and the time to complete a draw will depend upon the particular graphic being processed. |

The graphics generator 43 may have two modes of operation, primitive draw and line draw, and the graphics generator 43 may be set to operate in one of the two modes based on a "Draw type" signal from the state machine control logic 65. The two modes of operation are summarised below:
- Primitive draw: The "drawn" pixel data is copied into the foreground buffer. The address specifies the primitive to be copied, the "Start_X2" and "End_Y2" signals specify what proportion of the primitive data is to be copied.
- Line draw: X1,Y1 and Start_X2,End_Y2 define the two end points of the line. The primitive image address specifies the primitive to be used for a, e.g. Bresenham, line draw algorithm at the graphics generator 43.

After the graphics generator 43 has generated foreground image pixel data, it will send this data, together with the corresponding addresses in the foreground buffer and a read-modify-write flag to the subsequent stage(s) of the display sub-system 31.

It should be appreciated that the method illustrated in Figure 6 may be performed in 'real-time', that is, substantially at the same time that the parameter data is received or measured. Alternatively, it may be performed 'offline' on parameter data which has been measured and recorded previously.

The method described above can be used to generate pages illustrating the condition of a number of different operation parameters in a number of different configurations.

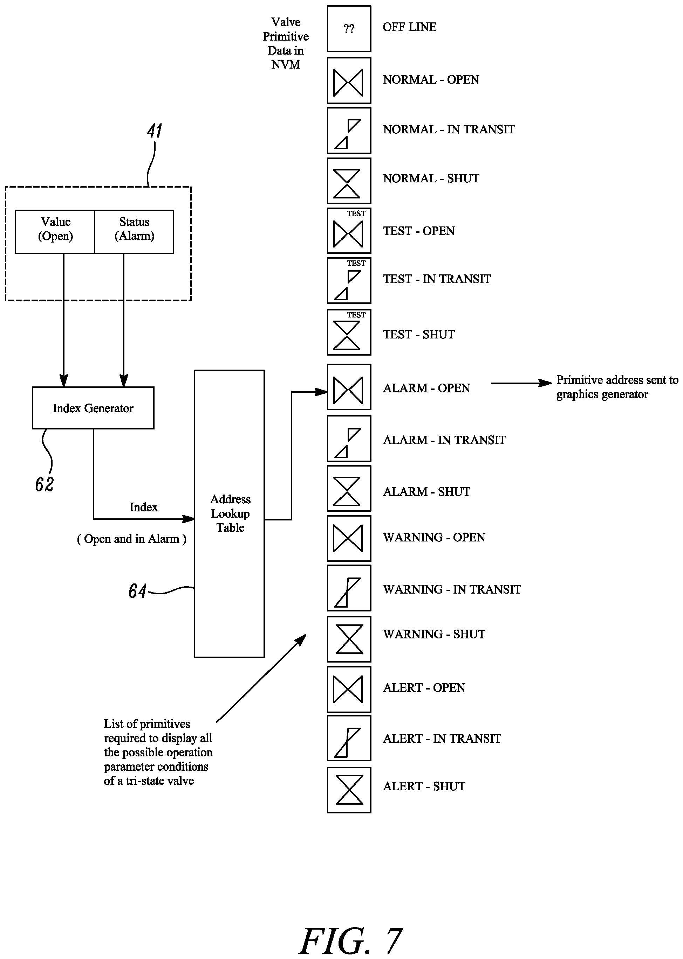

**Figure 7** shows an example of how an image representing the operational parameter condition of an enumerated tri-state valve is generated. In the arrangement of Figure 7, image icons (primitives) representing all the possible conditions of a tri-state valve have been pre-generated and stored in non-volatile memory (NVM).

The value and status of the parameter data stored in the shared memory 41 form a bit pattern that is used to calculate and index into the corresponding image address lookup table 64.

The particular index value in the example shown in Figure 7 corresponds to a valve that is open and in alarm. The page builder state machine 42 may then send the primitive image address for that image icon to the graphics processor 43 for processing. For this particular graphics type, all the image data for that image icon is displayed, so the Start_X2 value and the End_Y2 value determined by the screen position calculator 66 will be zero and full scale, respectively.

Not all valves will necessarily be required to be capable of showing all the possible conditions of the valve that are stored in memory. Consider a valve that has no alarms, warnings or alerts, for example. In such cases, the image address lookup table 64 for this particular type of valve will have entries that map to an "Offline primitive" icon, as shown. In this way only valid mappings are defined. If the parameter data has invalid "unmapped" values, the image is shown as "offline" indicating an error in the parameter data.

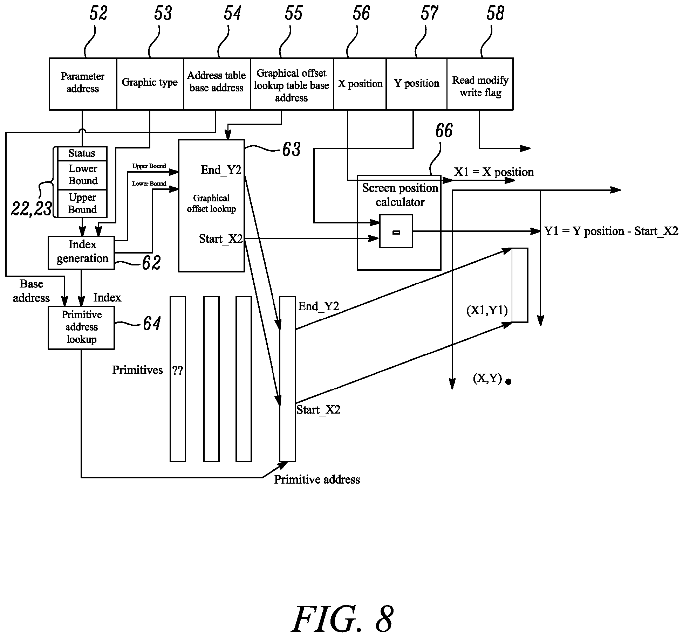

**Figure 8** is a schematic illustration of how a page representing an operation parameter condition corresponding to a band graphic may be generated. In the arrangement of Figure 8, image icons (primitives) representing all the possible band graphics have been pre-generated and stored in non-volatile memory (NVM).

The status 22 and the lower and upper bound values 23 of the parameter data stored in the shared memory form a bit pattern that is used to calculate and index into the corresponding image address lookup table 64. This may be done, as is the case in the arrangement of Figure 8, using appropriate configuration data in a definition table entry 51.

The particular index value in the example shown in Figure 8 points to a primitive that corresponds to a range 0 to 100% between the upper and lower bound values. The page builder state machine 42 may then send the primitive image address for that image icon to the graphics processor 43 for processing.

The mapping of the image icon height in pixels to the upper and lower bounds values is done through the graphical offset lookup table 63, as shown. In this case, the control logic will access the graphical offset lookup table 63 twice to provide the start and end pixel points of the primitive for the graphics generator (Start_X2 and End_X2 values).

The Start_X2 value is also subtracted (Y increases down the page) from the Y position 57 in the definition table entry 51, as the drawing point in the buffer has to be offset to take into account the lower bound point. This becomes the Y1 value passed to the graphics generator 43. The X position 56 and read modify write flag 58 in the definition table are passed directly to the graphics generator 43.

### User sub-svstem

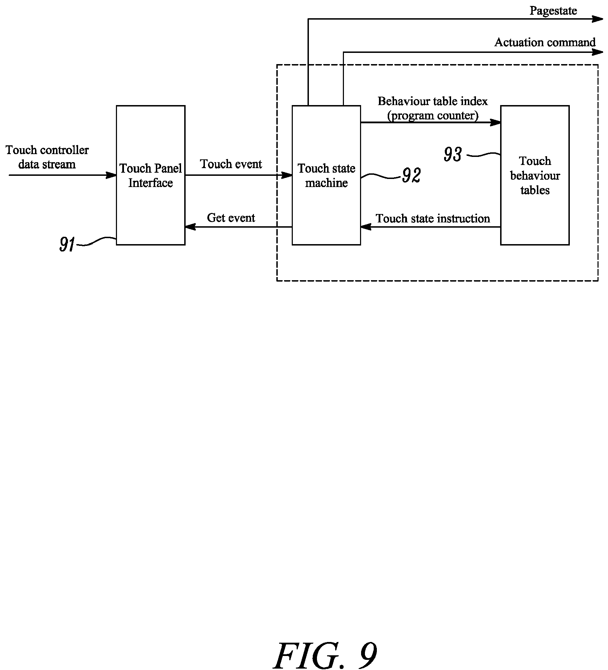

As shown in **Figure 9**, the user sub-system 32 comprises a touch state machine 92 and a touch behaviour table 93.

The touch state machine 92 is responsible for processing touch events received from a touchscreen via a touch panel interface 91 and issue appropriate control commands to the plant, such as actuation commands to operate an actuation system of the plant relating to the instrument being monitored, in response to the touch events.

The touch state machine 92 may receive a touch event indication from the touch panel interface 91 in one of the following forms:
- No touch
- Touch down + X,Y screen coordinates
- Touch hold + X,Y screen coordinates
- Touch release + X,Y screen coordinates

(The touch state machine 92 may operate much faster than the rate at which new data can arrive from the touchscreen 14, processing every touch event. Consequently most touch events retrieved will be No touch.)

The touch state machine 92 is also responsible for determining which set of configuration data should be used by the display sub-system 31 to generate a page. The touch state machine 92 may be operable to indicate the relevant set of configuration data to the display sub-system 31 by means of a state signalling (the "Pagestate").

The operation of the touch state machine 92 to issue state signalling or actuation commands may be facilitated by storing suitable touch configuration data and instructions in touch behaviour tables 93.

The touch state machine 92 may operate to read the entries in the touch behaviour tables 93 sequentially (by automatically incrementing an index value serving as a program counter) to retrieve touch state instructions and use these together with the touch events to determine appropriate state signalling and any actuation commands.

The touch behaviour table contains touch state instructions with the following fields:
- Index value for current entry;
- Instruction condition to be tested;
- Operands to be tested;
- The next set of configuration data (state signalling) to be used (latched) if the instruction condition test is true;
- The next index value to use as an entry point into the touch behaviour table if the instruction condition test is true; and
- The actuation command to be issued (latched) if the instruction condition test is true.

These different fields are shown respectively in the columns of Table 2, together with their corresponding data.

**Table 2 - Touch behaviour table instructions**

| **Index (Internal State)** | **Test instruction condition** | **Operands** | **State signalling** | **Next index value (internal state)** | **Actuation command** |
|---|---|---|---|---|---|
| Current index | Touch down inside area | X1,Y1,X2,Y2 | State signalling | Next index | Command |
| Current index | Touch release inside area | X1,Y1,X2,Y2 | State signalling | Next index | Command |
| Current index | Touch hold inside area | X1,Y1,X2,Y2 | State signalling | Next index | Command |
| Current index | No Touch | None | State signalling | Next index | Command |
| Current index | Touch down outside area | X1,Y1,X2,Y2 | State signalling | Next index | Command |
| Current index | Touch release outside area | X1,Y1,X2,Y2 | State signalling | Next index | Command |
| Current index | Touch hold outside area | X1,Y1,X2,Y2 | State signalling | Next index | Command |
| Current index | Jump | None | State signalling | Next index | Command |
| Current index | Timeout | None | State signalling | Next index | Command |

The jump instruction would typically be used to implement a polling loop for some touch event, while maintaining the same state signalling and unconditionally looping back to the same touch behaviour table entry point.

The timeout instruction is used to mitigate erroneous touch events and tear down popup controls if there is a lack of touch activity from the user.

In order to initiate an, e.g., actuation command, a two-stage graphical mechanism may be used to validate the touch command/event. In particular, the operator may be required to select a base control on the screen, which results in a control pop-up panel being displayed. The operator may then be required to select a control on a pop-up panel of the display in order for a command to be registered and acted upon.

This process may require (at least) six valid touch events:
- a valid touch down event on the base level control is required;
- a valid touch hold event(s) on the base level control is required (within a time window);
- a valid touch release on the base level control is required (within a time window);
- a valid touch down event on one of the pop-up controls is required (within a time window);
- a valid touch hold event(s) on the correct pop-up control is required (within a time window); and
- a valid touch release on the correct pop-up control is required (within a time window).

If an invalid touch is received or a timeout occurs the state signalling is reset to the start (resulting in the base control button being shown in the unpressed state and any pop-up panel being torn down).

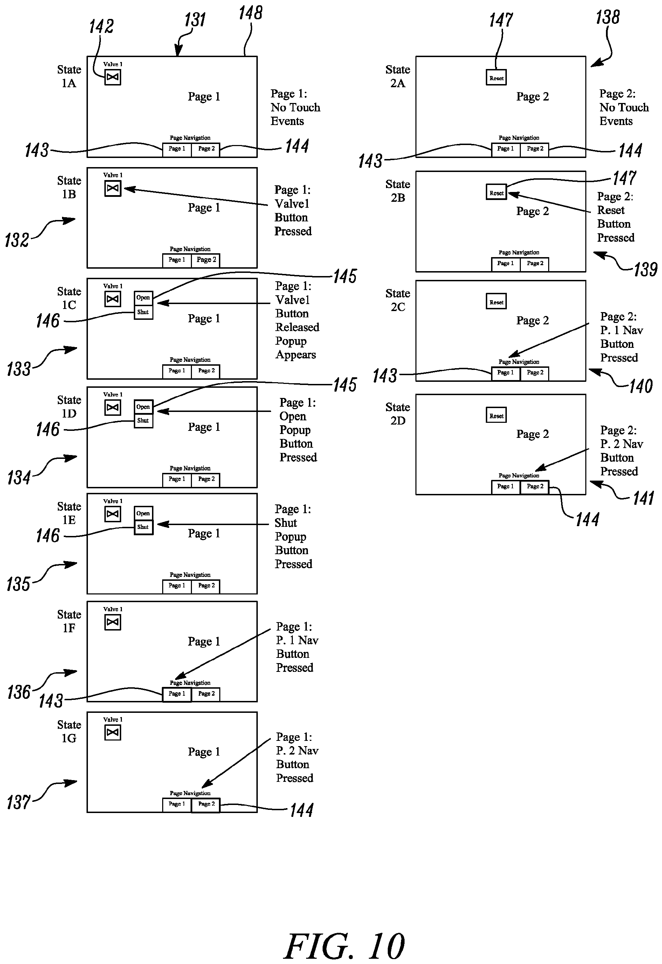

Operation of the user sub-system 32 will now be described with respect to a worked example illustrated in **Figures 10-14****.** The worked example corresponds to the data processing system of the present disclosure when used to monitor and control the operating condition of an enumerated tri-state valve ("Valve 1" in Figures 10-14) similar to that of Figure 7.

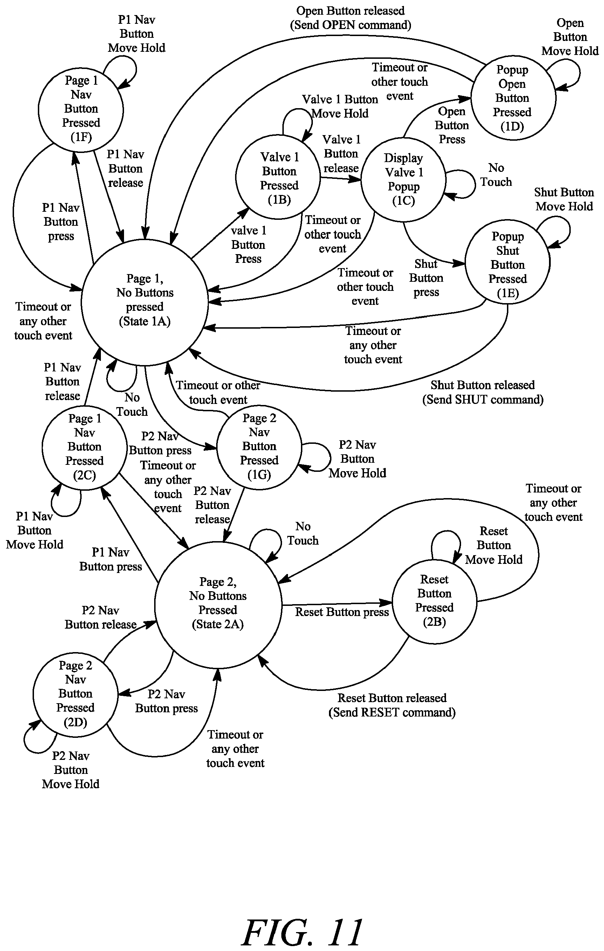

With respect to Figures 10 and 11, the data processing system is able to display eleven pre-defined page configurations 131-141 when monitoring and controlling the operating condition of the valve. The eleven page configurations 131-141 represent the total number of configurations of image data to be displayed for a first page and a second page ("Page 1" and "Page 2" in Figures 10-14) that can be generated for display on a display device to a user of the data processing system.

Although Figures 10-14 show different configurations for a first page and a second page, it will be appreciated that the data processing system effectively defines eleven different pages that can be displayed and the current page being displayed may be any one of those pages.

As best seen in Figure 10, each pre-defined page configuration 131-141 includes a plurality of graphical icons overlaid on a background image 148 (that is pre-defined and stored in memory), as will now be discussed.

In page configuration 131, there is provided an icon 142 representing an operation parameter of the valve being monitored and two user-input options 143 and 144 that may be selected to navigate between Page 1 and Page 2. The image data that is used for icon 142 in Figure 10 will depend on the parameter data received from the plant, as described above with respect to Figure 7.

In the example of Figure 10, each icon 142, 143, 144 acts as a user-input option that can be selected by a user to control operation of the data processing system or operation of the plant. For example, icon 142 not only indicates the current condition of the valve, but also acts as a user-input option that a user can select to control operation of the plant. The control mechanism via the valve icon 142 is in the form of a two-stage graphical mechanism. In particular, the operator may first be required to press icon 142 on the screen before a control pop-up panel is displayed.

When a valid touch event for an icon in a given configuration occurs, such as a selection of a user input option, the data processing system will update (re-generate) or replace the current page being displayed with a new page corresponding to a different page configuration, as will now be discussed.

As best shown in Figures 10 and 11, when icon 142 in configuration 131 is pressed, the data processing system will update or replace the current page being displayed with a new page corresponding to page configuration 132, in which the border surrounding icon 142 is highlighted. If the icon 142 in configuration 132 is released within a pre-defined timeframe, a new page configuration 133 is generated which includes a control pop-up panel comprising a pre-defined control option 145 for opening the valve ("OPEN") and a pre-defined control option 146 for closing the valve ("SHUT"). If a user presses control option (icon) 145 then page configuration 134 showing icon 145 highlighted is displayed, whereas if a user presses control option 146 then page configuration 135 showing icon 146 highlighted is displayed. If the control options 145 and 146 are released within the timeframe, the system will issue a control command to either open or shut the valve and re-generate the current page according to page configuration 131. If, however, there is a timeout the system will re-generate the current page according to page configuration 131 without issuing any control commands.

If a user presses control option 143 in configuration 131, page configuration 136 showing icon 143 highlighted is displayed, whereas if a user presses control option 144 then page configuration 137 showing icon 144 highlighted is displayed. If control option 143 in configuration 136 is released within the timeframe or there is a timeout, page configuration 131 is displayed. If control option 144 in configuration 137 is released within the timeframe, page configuration 138 corresponding to Page 2 is displayed, whereas if there is a timeout or other touch event when control option 144 is being pressed in configuration 137 then configuration 131 is displayed.

In configuration 138 (for Page 2), there is provided a control option 147 for resetting the operation of the valve as well as the page navigation options 143 and 144.

With regard to the navigation options, if a user presses control option 143 in configuration 138 then page configuration 140 showing icon 143 highlighted is displayed, whereas if a user presses control option 144 in configuration 138 then page configuration 141 showing icon 144 highlighted is displayed. If control option 143 in configuration 140 is released within the timeframe, page configuration 131 is displayed, but if there is a timeout or any other touch event then configuration 138 is displayed. If control option 144 in configuration 141 is released within the timeframe, or if there is a timeout or other touch event, configuration 138 is displayed.

With regard to the reset button in configuration 138, if icon 147 is pressed then configuration 139 showing icon 147 highlighted is displayed. If reset button 147 in configuration 139 is released within the timeframe, configuration 138 is displayed and a reset command is sent to reset the valve. If, however, there is a timeout or other event occurs when reset button 147 in configuration 139 is pressed, configuration 138 is displayed.

In each configuration above, if a button/icon is held in the pressed state, then the same configuration will be displayed so long as there is not a timeout.

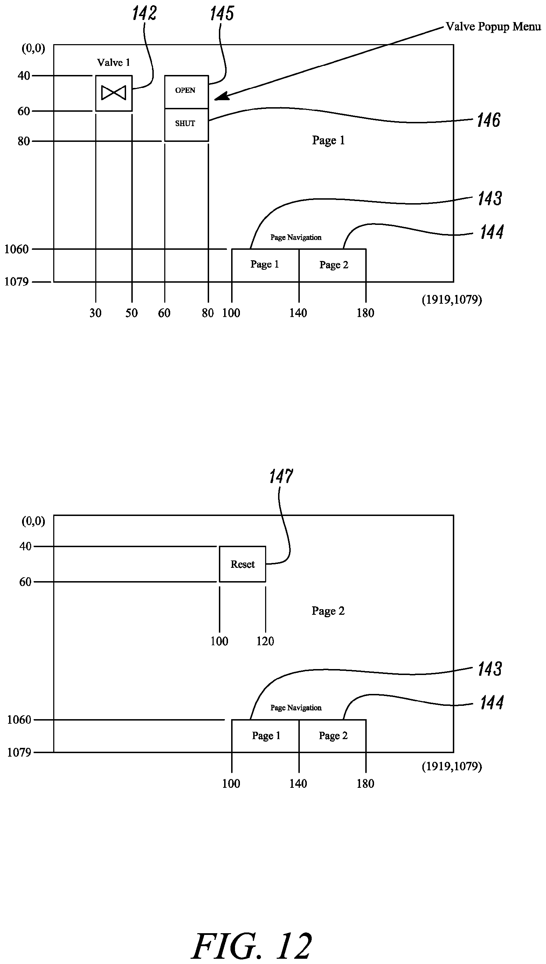

Figure 12 shows the display positions of all graphical icons defined for the first page and the second page of Figures 10 and 11. The positions of the graphical icons for the first page and the second page are given in terms of their pixel positions within the page. In this example, the page is scaled to the size of the display having 1080 pixels along the y-direction and 1920 pixels along the x-direction. A given icon will therefore have a position defined by its pixel coordinates within the display (correspondingly sized page), i.e. by pixel coordinates in the ranges of 0-1079 and 0-1919 along the y and x directions, respectively. For example, icon 142 is located at a position that spans pixel coordinates 40-60 in the y-direction and pixel coordinates 30-50 in the x-direction, for configurations 131-137.

As mentioned above, in order for the display sub-system to generate the current page according to one of the eleven page configurations shown in Figure 10, the data processing system maintains a set of configuration data for each of those page configurations. In the example of Figures 10-14, the configuration data for each page configuration 131-141 indicates to the display sub-system at least: the location in memory of pre-generated image data for the background image 148; the pixel (coordinate) positions within the display (page) that the graphical icons (pre-generated image data) should take; and the locations in memory for pre-generated image data to be used for the icons.

For every different page configuration 131-141, an equivalent "Pagestate" value is defined by the user sub-system 32 and sent to the display sub-system 31 so that the display sub-system 31 can determine which set of configuration data (and therefore what page configuration) to use to generate a page to be displayed (the current page to be displayed). To aid explanation, these Pagestates have been numbered 1A to 1G for Page 1, and 2A to 2D for Page 2. However, in practice touch page state may be encoded as a 12 bit number between 0 and 4095.

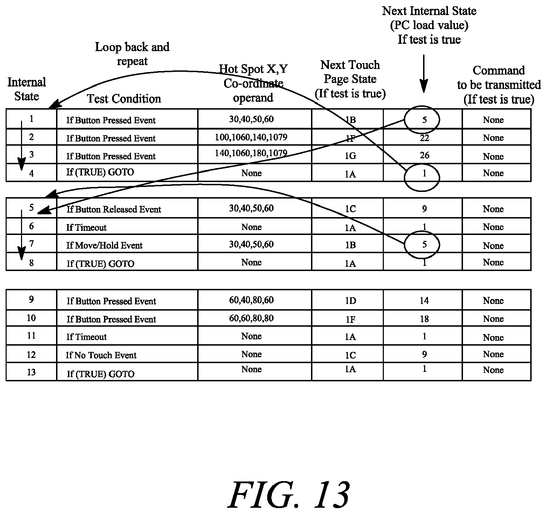

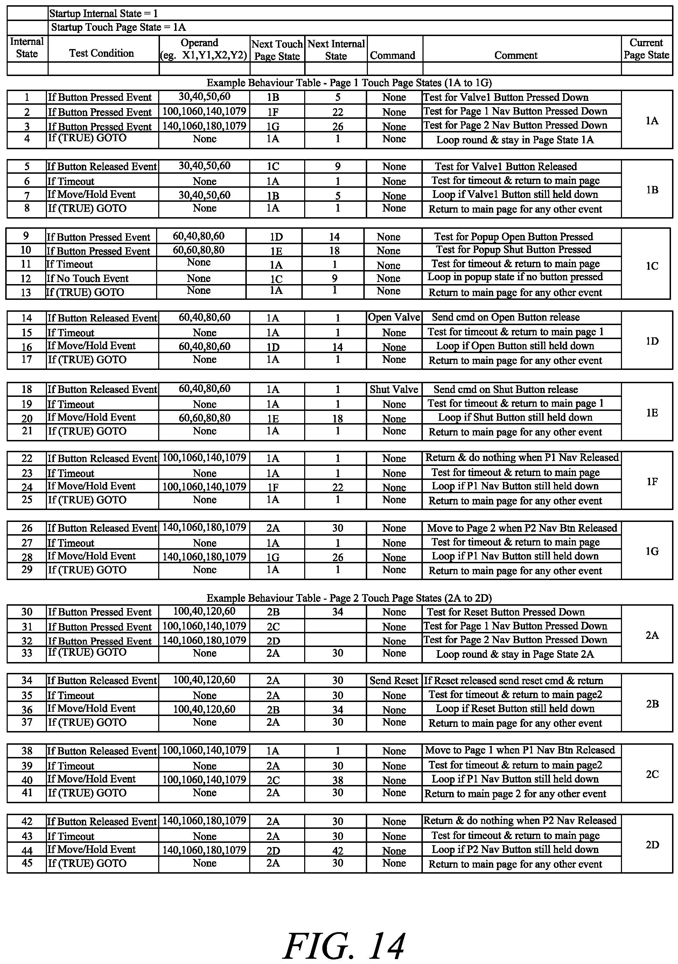

As mentioned above, the Pagestate value to be used to generate the current page to be displayed is controlled by the user sub-system 32 via the touch state machine 92 and the touch behaviour table 93 described with respect to Figure 9. Operation of the touch state machine 92 and touch behaviour table 93 for this worked example will now be described with respect to Figures 13 and 14.

Figure 13 shows the touch behaviour table 93 entries for page configurations 131-133 of Figures 10 and 11. Each entry (row) in the touch behaviour table 93 is associated with an internal state number as shown in the left-hand column.

Touch state machine 92 begins to execute each test instruction within its behaviour table 93. In this example, the start-up state of the program counter is "1" and page configuration 131 is initially used (corresponding to Pagestate 1A), the first four entries of the behaviour table 93 are executed in sequence. The fourth (If TRUE) GOTO instruction provides the mechanism for an unconditional loop back to the first instruction.

The program counter of the user sub-system continues to cycle through internal states 1 to 4, waiting for a button (icon) in the current page being displayed to be validly pressed, during which the value of Touch Page State remains unchanged at "1A".

Entries 1 to 4 of the behaviour table contain test conditions designed to detect all valid presses of icons (touch events) for configuration 131 (Pagestate 1A), as follows:
- Entry 1: Test for Valve button Pressed between Co-ords (30,40 - 50,60)
- Entry 2: Test for Page1 button pressed between Co-ords (100,1060 - 140,1079)
- Entry 3: Test for Page2 button pressed between Co-ords (140,1060 - 180,1079)
- Entry 4: Loop back to Entry 1, and repeat tests.

When a particular test condition is met, i.e. when an icon is validly pressed, the Program Counter and Pagestate Latch are updated with the values specified within a "Next Internal State" and "Next Touch Page State" fields of that particular Behaviour Table entry. This causes the touch state machine's program counter to jump to a new part of the Behaviour Table, and the display subsystem to display a new page based on the new Pagestate value.

In the example of Figure 13, the first entry of the Behaviour Table is responsible for monitoring any touch events for the Valve 1 icon 142 of Figure 10, and has a Next Internal State field value of 5, and a Next Touch Page State field value of 1B. When the Valve 1 button (icon) 142 is pressed, the touch state machine program counter will therefore be set to 5, resulting in a jump to the fifth entry of the behaviour table. Also, the Pagestate Latch will be updated with a value of 1B. This new Pagestate value of 1B will in turn force the display subsystem to replace the current page with a new page to be displayed, having a different configuration (configuration 132 of Figure 10) as determined by the configuration data for that Touch Page State value of 1B.

After the program counter jumps to entry 5 of the behaviour table 93, a new loop of test instructions is executed while the icon 142 remains pressed. Behaviour Table entry 7 causes the touch state machine to loop back to entry 5 while the button remains pressed. Escape from this new loop is achieved by the following behaviour table entries, under the following circumstances:
- Entry 5: A Valve button release event is detected between Coords (30,40 - 50,60)
- Entry 6: A timeout event occurs.
- Entry 7: The touch move/hold event is no longer inside the valve area (30,40 - 50,60) causing the program to execute table entry 8.
- Entry 8: A catchall GOTO returns the system back to configuration 131 if anything other than a move/hold within the active valve 1 icon 142 occurs.

The entire behaviour table 93 required to implement the worked example of Figures 10-12 is shown in Figure 14. It should be noted that under normal operation, the program counter simply increments through the behaviour table a line at a time until it encounters a test condition that produces a true result. Only then are the "Next Internal State" and "Text Touch Page State" table entry values used to update the Program Counter and Touch Page State Latch respectively. This initiates a jump within the behaviour table, and a switch of Pagestate (page configuration) for the display subsystem.

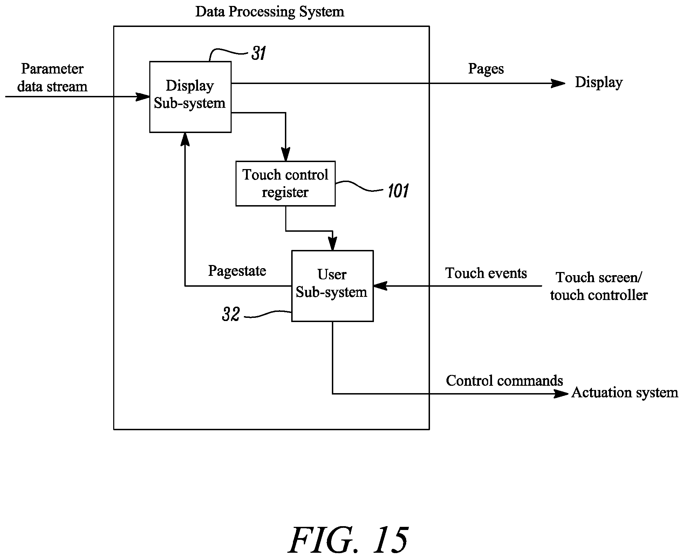

With respect to **Figure 15**, the Applicants have recognised that it may be necessary or desirable for the incoming parameter data stream from the data concentrator 12 to affect the behaviour of the user sub-system 32, for example to disable touch controls or to influence the selection of the Pagestate that is used for a subsequent page to be displayed. For example, where the operation parameter is of a single enumeration value graphics type described with respect to Figure 2a, if the value of a condition of an operation parameter (determined by the display sub-system 31) is below a certain threshold condition value, it may be desirable for the user sub-system 32 to change the set of configuration data that is read for a subsequent page, e.g. to remove specific user input options.

In order to facilitate information being passed from the display sub-system 31 to the user sub-system 32, there is provided a touch control register 101 as shown in Figure 15. The touch control register 101 serves as an intermediate memory buffer that is accessible by both the display sub-system 31 and the user sub-system 32, and that can be used to store information that may be relevant to the user sub-system 32 when, e.g. determining a Pagestate signal to use in a subsequent page.

**Figure 16** schematically illustrates the operation of the data processing system 13 when implementing a touch control register in greater detail. In the arrangement shown, the touch control register 101 is within the user sub-system 32, but this is not required.

In order for the display sub-system 31 to know that it is desirable or necessary for information to be passed to the user sub-system 32 (e.g. for an operation parameter condition in the parameter data that will affect the Pagestate for subsequent pages), a new format of definition table entries 51 is used as shown in Figure 16.

In particular, Figure 16 shows a definition table entry 51 that corresponds substantially to that of Figure 5a, except that a new graphic type indicating a touch control type is indicated in field 53. The definition table entry 51 of Figure 16 also differs to that of Figure 5a in that instead of having an X position field 56 and a Y position field 57, there is a parameter detect value field 111 and a touch control register value field 112, respectively. The parameter detect value field 111 indicates a threshold parameter condition value that will be compared to the relevant parameter data before the touch control register 101 is updated with a value indicated in the touch control register value field 112. The value indicated in the touch control register value field 112 may be any value that may be used by the user sub-system 32 to determine a Pagestate (set of configuration data) to use for a subsequent page.

The display sub-system 31 may be configured to determine whether the condition of an operation parameter to be included in the current page meets a pre-defined condition (based on a comparison against the threshold value) and indicate the result of this determination to the user sub-system 32. For example, the state machine control logic 65 of the display sub-system 31 may be operable to test whether the parameter value that is read from the memory 41 is equal to the threshold parameter condition value that is indicated in the parameter detect value field 111, and if it is determined that that is the case, cause the display sub-system 31 to write the value in the touch control register value field 112 in the touch control register 101.

As the display sub-system and user sub-system may operate asynchronously, some handshaking may be required to ensure coherent data is passed into the touch control register 101. This can be achieved, as shown in Figure 16, by the state machine control logic 65 operating (at the point where the display list is read for the first time) to reset and enable an accumulating latch 113, in which the value to be written to the touch control register 101 is temporarily stored. When the data is ready to be written to the touch control register 101, e.g. at the end of the display list, the user sub-system 32 reads this latch into the touch control register in response to a latch read command received from the control logic.

It will be appreciated that multiple touch control register values can be defined in each definition table 51. In such cases, their outputs will be bitwise ORed together before finally being passed to the Touch Control Register at the end of the Display list (which is the completion of the display construction for the current Pagestate). This is achieved by the "Latch read" signal from the page builder state machine.

In the arrangement of Figures 15 and 16, the user sub-system 32 (in particular the touch state machine 92) is configured with additional operability, i.e. to read the touch control register 101 in addition to the touch events. Therefore, a new entry is added to the touch behaviour table 93 described above with respect to Table 2. This new entry includes a corresponding Pagestate and actuation command instruction for a given touch control register value, as shown in Table 3.

**Table 3 - Touch behaviour table touch control register instruction**

| **Test instruction** | **Operands** | **State signalling** | **Actuation command** | **Next behaviour table index** |
|---|---|---|---|---|
| Touch control register == <n> | Bit pattern <n> | Pagestate | Command | Next index |

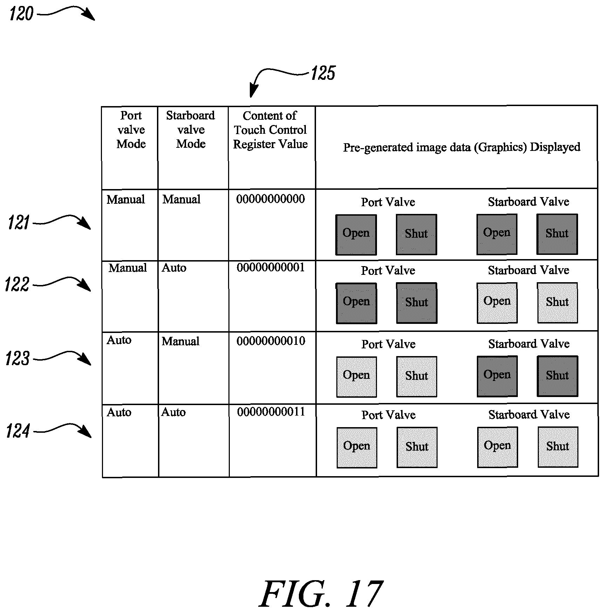

An example implementation of the touch control register of Figures 15 and 16 will now be described with respect to the table 120 shown in Figure 17.

**Figure 17** illustrates an example implementation of a touch control register for an arrangement where there is a requirement to control two instruments, specifically two valves of a plant: a port valve and a starboard valve.

In the example of Figure 17, a set of configuration data for a page defines a configuration of four user input options to be displayed as icons in the page. In particular, the set of configuration data indicates two user input options for each valve: an option to either open or shut the valve. The user can select one of the options to change operation of the plant by either opening or shutting the valve(s). This arrangement would be sufficient where the valves are always manually operated by a user. However, in some circumstances each valve can operate in an automatic (auto) mode of operation, and when a valve is in an auto mode it may be desirable to disable or alter the appearance of the control options that are displayed in the page for the valve.

To facilitate this, the data concentrator 12 of Figure 1 is configured to generate a parameter data stream including data indicating whether the valve is operating in a manual or an auto mode. For example, for each valve there is an associated operation parameter received in the parameter data stream; for example these might be called "Port Valve Mode" and "Starboard Valve Mode". Each operation parameter is an enumerated data type and can have a value of "Auto" or "Manual".

Based on this operation parameter, the page generation stage is able to alter the appearance of the user control options that are displayed in the page. In the example of Figure 17, when a valve is in an auto mode, the user input options for the valve are appropriately "shaded" to indicate that control is disabled.

There are four possible page configurations for this: a first configuration where the control options for both valves are not shaded (i.e. are in a manual mode) as shown in row 121; a second configuration where the control valves for both valves are shaded (i.e. are in an auto mode) as shown in row 124; a third configuration where the control options for the port valve are not shaded but the control options for starboard valve are shaded, as shown in row 122; and a fourth configuration where the control options for the port valve are shaded but the control options for starboard valve are not shaded, as shown in row 123. Accordingly, there are four corresponding sets of configuration data pre-defined for the valves, one set for each configuration of user-input control options to be displayed in a page for the valves.

During operation, the state machine control logic 65 of the display sub-system 31 will compare the operation parameter for each valve with a reference operation parameter to determine whether each valve is in a manual or auto mode of operation. In response to this determination, the display sub-system 31 sets the content of the touch control register (e.g. by setting a different bit in the touch control register 101) to indicate the result of the determination to the user sub-system 32, as shown in column 125 of Figure 17.

In the user sub-system 32, the Touch Behaviour Table 93 will contain entries to detect all four possible combinations of valve operating modes, and will select one of four sets of configuration data (Pagestate) to use for the page, accordingly.

While the technology has been described above as being particularly relevant and applicable to plant (e.g. control and) monitoring systems, this is not required. The technology described herein can be applied to any field where high integrity display systems are required. Such fields include Civil nuclear reactor control rooms, Cockpit displays, Train control, Ship control and process plant control room safety displays.

Furthermore, while the technology herein has been described above with respect to touch events and a touchscreen, this is not required. Any interface (between the data processing system and a user) that is capable of recognising a user input, e.g. via any computing means such as a mouse or keyboard, can be used instead.

The design of the data processing system is such that the image seen on the screen can be deterministically traced, pixel by pixel, to the internal configuration data and the received parameter data stream. Consequently, the overall integrity of the monitoring system when implementing the data processing system can be sufficiently high for the monitoring and control of a nuclear plant.

It will be understood that the technology described herein is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A data processing system (13) for generating pages of image data to be displayed in a monitoring system (10) which monitors a condition of one or more operation parameters of an instrument, the data processing system (13) comprising a display sub-system (31) configured to:
receive parameter data representing the condition of the one or more operation parameters being monitored for the instrument;
read a set of pre-generated configuration data (50) for a current page to be displayed, wherein the set of configuration data (50) indicates a pre-defined page configuration for displaying a group of at least one operation parameter of the one or more operation parameters being monitored in the current page;
for each operation parameter in the group of at least one operation parameter to which the set of configuration data (50) relates:
determine the current condition of the operation parameter from the parameter data; and
select, based on the current condition of the operation parameter, corresponding pre-generated image data from a set of stored pre-generated image data (48) representing a plurality of pre-defined conditions for the operation parameter; and
generate the current page to be displayed, wherein the current page includes the selected pre-generated image data for the group of at least one operation parameter, and wherein an attribute of the selected pre-generated image data within the generated current page to be displayed is controlled based on the set of configuration data (50).

2. A data processing system (13) as claimed in claim 1, wherein the display sub-system (31) is configured to select corresponding pre-generated image data based on the current condition of the operation parameter by:
using the current condition of the operation parameter to generate a pointer to a location in memory (48) at which pre-generated image data that represents a corresponding pre-defined condition is stored.

3. A data processing system (13) as claimed in claim 2, wherein:
locations in memory (48) for the set of stored pre-generated image data representing the plurality of pre-defined conditions for the operation parameter are indicated in respective entries of a corresponding address look-up table (64) in memory;
the set of configuration data (50) for the current page to be displayed comprises data identifying a base address of the corresponding address look-up table (64); and
the pointer is in the form of an offset from the base address to an entry in the corresponding address look-up table (64) at which the location in memory for the pre-generated image data that represents the corresponding pre-defined condition is indicated.

4. A data processing system (13) as claimed in any of the preceding claims, wherein the set of configuration data (50) comprises at least one of:
data indicating the horizontal position within the current page that the selected pre-generated image data should take;
data indicating the vertical position within the current page that the selected pre-generated image data should take; and
data indicating a type of graphic element that the selected pre-generated image data corresponds to.

5. A data processing system (13) as claimed in any of the preceding claims, wherein:
the set of configuration data (50) further indicates a pre-defined page configuration for at least one pre-defined user-input option that is to be represented in the current page to be displayed; and
the display sub-system (31) is configured to include pre-generated image data representing the at least one pre-defined user-input option in the generated current page.

6. A data processing system (13) as claimed in claim 5, wherein the data processing system (13) comprises a user sub-system (32) configured to:
receive an input from a user of the monitoring system (10) corresponding to a selection of a pre-defined user-input option that is represented in the current page for the at least one operation parameter; and
issue an instruction to alter operation of a device that influences the operation parameter, based on the received input and information stored in an input look-up table (93), wherein respective entries in the input look-up table (93) each corresponds to a pre-defined user input option and includes information indicating a corresponding instruction to alter operation of the device.

7. A data processing system (13) as claimed in any of the preceding claims, wherein:
the set of configuration data (50) that is read for the current page to be displayed is one of a plurality of different sets of pre-generated configuration data (50) indicating respective page configurations for displaying a group of at least one operation parameter being monitored or at least one pre-defined user-input option; and
the display sub-system (31) is configured to select the set of configuration data (50) that is read for the current page to be displayed based on an input from a user of the monitoring system (10), wherein the input is received by a user sub-system (32) of the data processing system (13).

8. A data processing system (13) as claimed in claim 7, wherein the user sub-system (32) is configured to:
receive the input from a user of the monitoring system (10);
determine which set of configuration data (50) should be read for the current page to be displayed based on the received input and information stored in a corresponding entry in an input look-up table (93), wherein the corresponding entry in the input look-up table (93) includes information indicating a corresponding set of configuration data (50) to be read for the current page to be displayed; and
send state signalling indicating the result of the determination to the display sub-system (31).

9. A data processing system (13) as claimed in claim 7 or 8, wherein:
the set of configuration data (50) that is read for the current page to be displayed further indicates a reference condition value for the operation parameter;
the display sub-system (31) is configured to compare the determined current condition of the operation parameter with the reference condition value and indicate the results of the comparison to the user sub-system (32); and
the user sub-system (32) is configured to:
determine which set of the plurality of different sets of pre-generated configuration data (50) should be read by the display sub-system (31) for a subsequent page to be displayed, based on the results of the comparison; and
send state signalling to the display sub-system (31) indicating which set of pre-generated configuration data (50) should be read for a subsequent page to be displayed.

10. A method of operating a data processing system (13) for generating pages of image data to be displayed in a monitoring system (10) which monitors a condition of one or more operation parameters of an instrument; the method comprising a display sub-system (32) of the data processing system (13):
receiving parameter data representing the condition of the one or more operation parameters being monitored for the instrument;
reading a set of pre-generated configuration data (50) for a current page to be displayed, wherein the set of configuration data (50) indicates a pre-defined page configuration for displaying a group of at least one operation parameter of the one or more operation parameters being monitored in the current page;
for each operation parameter in the group of at least one operation parameter to which the set of configuration data (50) relates:
determining the current condition of the operation parameter from the parameter data; and
selecting, based on the current condition of the operation parameter, corresponding pre-generated image data from a set of stored pre-generated image data (48) representing a plurality of pre-defined conditions for the operation parameter; and
generating the current page to be displayed, wherein the current page includes the selected pre-generated image data for the group of at least one operation parameter, and wherein an attribute of the selected pre-generated image data within the generated current page to be displayed is controlled based on the set of configuration data (50).

11. A method as claimed in claim 10, wherein selecting corresponding pre-generated image data based on the current condition of the operation parameter comprises:
the display sub-system (31) using the current condition of the operation parameter to generate a pointer to a location in memory (48) at which pre-generated image data that represents a corresponding pre-defined condition is stored.

12. A method as claimed in claim 11, wherein:
locations in memory (48) for the set of stored pre-generated image data representing the plurality of pre-defined conditions for the operation parameter are indicated in respective entries of a corresponding address look-up table (64) in memory;
the set of configuration data (50) for the current page to be displayed comprises data identifying a base address of the corresponding address look-up table (64); and
the pointer is in the form of an offset from the base address to an entry in the corresponding address look-up table (64) at which the location in memory for the pre-generated image data that represents the corresponding pre-defined condition is indicated.

13. A method as claimed in any of claims 10 to 12, wherein:
the set of configuration data (50) further indicates a pre-defined page configuration for at least one pre-defined user-input option that is to be represented in the current page to be displayed; and
the generated current page includes pre-generated image data representing the at least one pre-defined user-input option.

14. A method as claimed in claim 13, wherein the method comprises a user sub-system (32):
receiving an input from a user of the monitoring system (10) corresponding to a selection of a pre-defined user input option that is represented in the current page for the at least one operation parameter; and
issuing an instruction to alter operation of a device that influences the operation parameter, based on the received input and information stored in an input look-up table (93), wherein respective entries in the input look-up table (93) each corresponds to a pre-defined user input option and includes information indicating a corresponding instruction to alter operation of the device.

15. One or more field-programmable gate arrays configured to perform the method as claimed in any of claims 10 to 14.
